# EUROPÄISCHE PATENTSCHRIFT

(11) **EP 0 656 991 B1**
(45) Veröffentlichungstag und Bekanntmachung des Hinweises auf die Patenterteilung: **21.08.1996**
(21) Anmeldenummer: 93914729.4
(22) Anmeldetag: 25.06.1993
(51) Int. Cl.: F02B 27/02, F02M 35/10

(54) **SAUGROHRANLAGE FÜR EINE MEHRZYLINDER-BRENNKRAFTMASCHINE**
INLET PIPE ASSEMBLY FOR A MULTIPLE CYLINDER INTERNAL COMBUSTION ENGINE
ENSEMBLE COLLECTEUR D'ADMISSION POUR MOTEURS A COMBUSTION INTERNE A CYLINDRES MULTIPLES

(30) Priorität: 26.08.1992 DE 4228334
(43) Veröffentlichungstag der Anmeldung: 14.06.1995
(73) Patentinhaber: AUDI AG, D-85002 Ingolstadt (DE)
(72) Erfinder: OHRNBERGER, Gerd, D-6956 Neudenau (DE)
(86) Internationale Anmeldenummer: EP9301631
(87) Internationale Veröffentlichungsnummer: WO9404803

(56) Entgegenhaltungen:
- EP-A- 0 177 794
- EP-A- 0 215 628
- EP-A- 0 337 816
- WO-A-91/00419

## Beschreibung

Die Erfindung betrifft eine Saugrohranlage für eine Mehrzylinder-Brennkraftmaschine entsprechend dem Oberbegriff des Anspruchs 1.

Bei einer bekannten Saugrohranlage dieser Art (EP-B 0177794, Fig. 4 und 5) sind die Einzelsaugrohre mit einem Sammelsaugrohr zu einer Einheit zusammengefaßt, an die als eigenes Bauteil der Ansaugverteiler angeflanscht ist, der einerseits über ein Drosselklappenteil mit dem Sammelsaugrohr und andererseits mit den Einzelsaugrohren in Verbindung steht. Die Schwenkklappen für die zweiten Einzelsaugrohre sind auf Wellen angeordnet, welche den Ansaugverteiler durchdringen. Diese bekannte Saugrohranlage ist in der Herstellung verhältnismäßig aufwendig und bereitet Probleme in Bezug auf ein einwandfreies Zusammenwirken der im Ansaugverteiler gelagerten Schwenkklappen mit den in einem anderen Bauteil angeordneten zweiten Einzelsaugrohren.

Aufgabe der Erfindung ist es, eine Saugrohranlage der gattungsgemäßen Art zu schaffen, die sich durch einen einfachen Aufbau und eine entsprechend kostengünstigere Herstellung auszeichnet, und bei der ein einwandfreies Zusammenwirken der Schwenkklappen mit den zweiten Einzelsaugrohren sichergestellt ist.

Diese Aufgabe wird erfindungsgemäß durch die im Kennzeichen des Anspruchs 1 angegebenen Merkmale gelöst.

Dadurch, daß der Ansaugverteiler und die Einzelsaugrohre von einem einstückigen Gußteil gebildet sind, wird die Fertigung vereinfacht und es werden Versätze, die beim Zusammenfügen von zwei Gußteilen aufgrund der Fertigungstoleranzen praktisch unvermeidlich sind, vermieden. Dadurch, daß die Schwenkklappen in einem Tragkörper angeordnet sind, der lediglich in die die zweiten Einzelsaugrohre schneidende Längsbohrung in dem Gußteil eingesetzt zu werden braucht, wird einerseits ein einwandfreies Zusammenwirken der Schwenkklappen mit den zweiten Einzelsaugrohren sichergestellt und andererseits die Möglichkeit geschaffen, die Schwenkklappen für die zweiten Einzelsaugrohre für alle Zylinder einer Zylinderreihe vorzumontieren, wobei ein besonderer Vorteil darin zu sehen ist, daß die Lagerung der die Schwenkklappen tragenden Welle in dem Tragkörper erfolgt und nicht wie bei der bekannten Ausführung im Ansaugverteiler an zwei relativ weit voneinander entfernten Stellen.

Zur Verringerung des Bauraumes ist es zweckmäßig, wenn der Ansaugverteiler rohrförmig ist und sich die ersten Einzelsaugrohre in einem Bogen über mehr als 270° um den Ansaugverteiler erstrecken und jedes zweite Einzelsaugrohr parallel zu dem zugehörigen ersten Einzelsaugrohr radial innerhalb über einen Teilbereich desselben verläuft und mit diesem eine gemeinsame Wand besitzt und nahe des zylinderseitigen Endes des ersten Einzelsaugrohres in dieses mündet. Die Längsbohrung ist dabei vorzugsweise so angeordnet, daß sie die zweiten Einzelsaugrohre nahe ihrer Einmündung in die ersten Einzelsaugrohre schneidet.

Diese Ausbildung ist besonders vorteilhaft für eine Brennkraftmaschine mit zwei Zylinderreihen in V-Anordnung, wobei die den Zylindern der ersten Zylinderreihe zugeordneten Einzelsaugrohre sich im Uhrzeigersinn und die den Zylindern der zweiten Zylinderreihe zugeordneten Einzelsaugrohre sich entgegen dem Uhrzeigersinn um den Ansaugverteiler erstrecken und in Längsrichtung des Ansaugverteilers jeweils ein erstes und zweites Einzelsaugrohr für einen Zylinder der ersten Zylinderreihe auf ein erstes und zweites Einzelsaugrohr für einen Zylinder der zweiten Zylinderreihe folgt. Hierbei sind eine die zweiten Einzelsaugrohre für die Zylinder der ersten Zylinderreihe schneidende erste Längsbohrung und eine die zweiten Einzelsaugrohre für die Zylinder der zweiten Zylinderreihe schneidende zweite Längsbohrung vorgesehen, in die jeweils ein Tragkörper mit Durchbrüchen und in diesen auf einer Welle angeordneten Schwenkklappen eingesetzt ist. Diese beiden Wellen sind, wie an sich bekannt, zur gemeinsamen Drehung miteinander verbunden.

Um den Einströmvorgang in die zweiten Einzelsaugrohre möglichst wenig zu behindern, ist es zweckmäßig, die die Längsbohrungen enthaltenden Abschnitte des Gußteils zwischen benachbarten zweiten Einzelsaugrohren zu unterbrechen und jeden Tragkörper im Bereich dieser Unterbrechungen mit einem kleineren Querschnitt auszuführen als in den Bereichen, in denen die Durchbrüche mit den Schwenkklappen vorgesehen sind.

Ein Ausführungsbeispiel der Erfindung in Form einer Saugrohranlage für eine V-6-Brennkraftmaschine wird im folgenden unter Bezugnahme auf die Zeichnungen beschrieben. Es zeigt:
- Fig. 1: einen Längsschnitt der Saugrohranlage entlang Linie 1-1 in Fig. 2, und
- Fig. 2: einen Querschnitt entlang Linie 2-2 in Fig. 1.

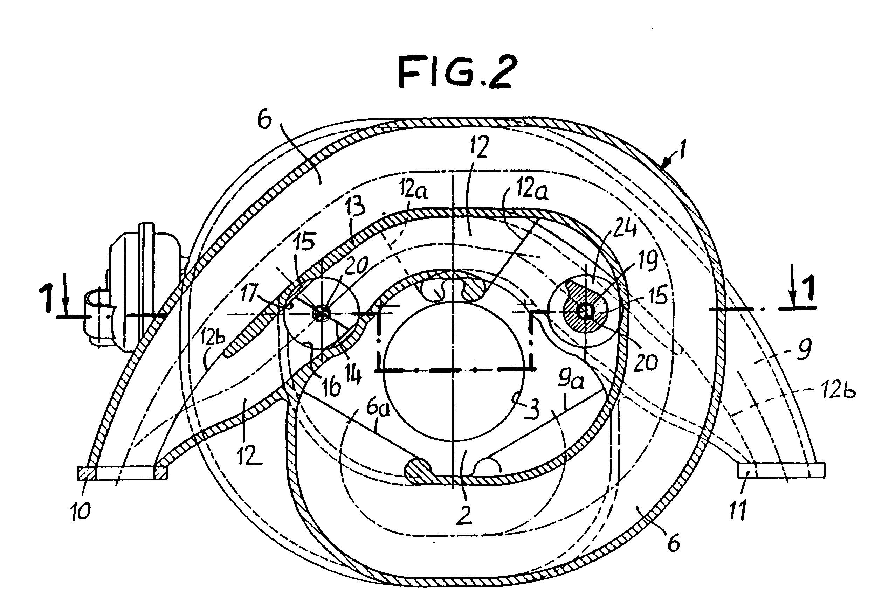

Die in den Zeichnungen dargestellte Saugrohranlage ist für eine V-6-Brennkraftmaschine zur Anordnung zwischen den Zylinderreihen bestimmt, die jeweils drei Zylinder enthalten. Sie weist ein einstückiges Gußteil 1 auf, das einen zentralen, rohrförmigen Ansaugverteiler 2 enthält, der durch eine Öffnung 3 in der rechten Wand des Gußteils 1 mit einem nicht dargestellten Drosselklappenteil verbunden ist. Von dem Ansaugverteiler 2 gehen erste Einzelsaugrohre 4, 5 und 6 für die Zylinder der ersten Zylinderreihe und erste Einzelsaugrohre 7, 8 und 9 für die Zylinder der zweiten Zylinderreihe aus. Die ersten Einzelsaugrohre 4 bis 9 sind nebeneinander angeordnet und erstrecken sich, wie aus Fig. 2 ersichtlich, um den Ansaugverteiler 2 herum, wobei die ersten Einzelsaugrohre 4, 5 und 6 in Fig. 2 entgegen dem Uhrzeigersinn und die ersten Einzelsaugrohre 7, 8 und 9 im Uhrzeigersinn verlaufen. Die Eintrittsöffnungen der ersten Einzelsaugrohre 4 bis 9 sind mit 4a bis 9a bezeichnet. Die ersten Einzelsaugrohre 4 bis 6 enden in einem Flansch 10, der an den Zylinderkopf der ersten Zylinderreihe angebracht wird, und die ersten Einzelsaugrohre 7, 8 und 9 enden in einem Flansch 11, der an den Zylinderkopf der anderen Zylinderreihe angeschraubt wird.

Radial innerhalb jedes ersten Einzelsaugrohres 4 bis 9 ist ein kurzes zweites Einzelsaugrohr 12 angeordnet, das ebenfalls von dem Ansaugverteiler 2 ausgeht und dessen Eintrittsöffnung mit 12a bezeichnet ist und das bei 12b in das zugehörige erste Einzelsaugrohr mündet, wie dies aus Fig. 2 ersichtlich ist. Die zweiten Einzelsaugrohre 12 verlaufen parallel zu den zugehörigen ersten Einzelsaugrohren und in gleicher Richtung wie diese und sie haben mit diesen eine gemeinsame Wand 13.

In jedem zweiten Einzelsaugrohr 12 ist eine Schwenkklappe 14 angeordnet, die in einem unteren Drehzahlbereich das zweite Einzelsaugrohr 12 absperrt, so daß nur die langen ersten Einzelsaugrohre 6 bis 9 wirksam sind. Im oberen Drehzahlbereich werden die Schwenkklappen 14 in ihre Offenstellung verschwenkt, wodurch nun im wesentlichen nur die kurzen zweiten Einzelsaugrohre 12 wirksam sind und durch ihren geringen Strömungswiderstand den Füllungsgrad und damit die Leistung der Brennkraftmaschine steigern.

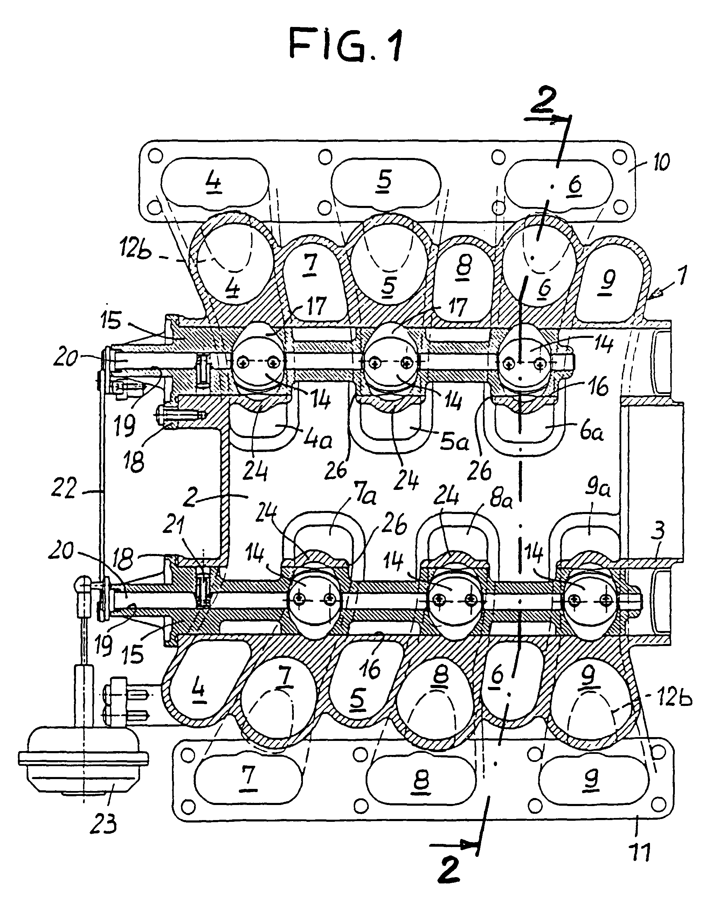

Zur Lagerung der Schwenkklappen 14 für die zweiten Einzelsaugrohre 12, die den ersten Einzelsaugrohren 4 bis 6 bzw. 7 bis 9 zugeordnet sind, welche zu den Zylindern einer Zylinderreihe führen, ist ein im wesentlichen zylindrischer Tragkörper 15 vorgesehen, der sich durch eine zylindrische Bohrung 16 im Gußteil 1 erstreckt, welche die zweiten Einzelsaugrohre 12 schneidet. Der Tragkörper 15 ist mit Durchbrüchen 17 versehen, die mit den zweiten Einzelsaugrohren 12 fluchten und in denen jeweils eine Schwenkklappe 14 angeordnet ist. Jeder Tragkörper 15 ist an seinem in Fig. 1 linken Ende mit einem Flansch 18 versehen, mit dem er an das Gußteil 1 angeschraubt wird. Jeder Tragkörper 15 hat eine Durchgangsbohrung 19, durch welche sich eine Welle 20 erstreckt, auf der die Schwenkklappen 14 befestigt sind. Die Wellen 20 sind jeweils durch einen Stift 21 in ihrem Tragkörper axial fixiert, jedoch um einen bestimmten Winkelbetrag drehbar. Die beiden Wellen 20 sind durch ein Gestänge 22 miteinander verbunden und werden beispielsweise durch einen pneumatischen Stellmotor 23 gemeinsam verdreht.

Durch die Anordnung der einer Zylinderreihe zugeordneten Schwenkklappen 14 im Tragkörper 15 ist eine Vormontage und Justierung der Schwenkklappen 14 ermöglicht, so daß zur Montage der Saugrohranlage lediglich erforderlich ist, die beiden Tragkörper 15 mit den vormontierten Schwenkklappen 14 in die Bohrungen 16 im Gußteil 1 einzuführen und zu fixieren.

Die die Tragkörper 15 aufnehmenden Abschnitte 24 des Gußteils 1 erstrecken sich zwangsläufig in den Ansaugverteiler 2 hinein. Um zu vermeiden, daß hierdurch der Einströmvorgang in die zweiten Einzelsaugrohre 12 behindert wird, sind diese Bereiche zwischen den Einzelsaugrohren 12 unterbrochen, und jeder Tragkörper 15 ist im Bereich dieser Unterbrechungen 26 mit einem kleineren Querschnitt ausgeführt als in den Bereichen, in denen die Schwenkklappen 14 angeordnet sind. Jeder Tragkörper 15 ist also, wie aus Fig. 1 ersichtlich ist, im wesentlichen nur im Bereich der zweiten Einzelsaugrohre 12 in dem Abschnitt 24 des Gußteils 1 geführt.

Die Erfindung ist nicht auf eine Saugrohranlge für eine Brennkraftmaschine mit zwei V-förmig angeordneten Zylinderreihen beschränkt, sondern auch bei einer Saugrohranlage für eine Brennkraftmaschine mit nur einer Zylinderreihe anwendbar. In diesem Fall entfallen naturgemäß die ersten Einzelsaugrohre 7, 8 und 9 und die zugehörigen zweiten Einzelsaugrohre mit ihren Klappen.

## Patentansprüche

1. Saugrohranlage für eine Mehrzylinder-Brennkraftmaschine, mit
- einem Ansaugverteiler (2)
- nebeneinander angeordneten Einzelsaugrohren (4 bis 9), die von dem Ansaugverteiler ausgehen und sich jeweils zu einem Zylinder erstrecken
- kürzeren zweiten Einzelsaugrohren (12), die von dem Ansaugverteiler (2) ausgehen und jeweils in ein erstes Einzelsaugrohr münden, und
- Schwenkklappen (14) zum Absperren oder Freigeben der zweiten Einzelsaugrohre,
**dadurch gekennzeichnet**,
daß der Ansaugverteiler (2) und die ersten und zweiten Einzelsaugrohre (6 bis 9 bzw. 12) von einem einstückigen Gußteil (1) gebildet sind, das eine die zweiten Einzelsaugrohre (12) schneidende Längsbohrung (16) aufweist, und daß in diese Längsbohrung ein Tragkörper (15) eingesetzt ist, der eine zentrale Durchgangsbohrung (19) und mit den zweiten Einzelsaugrohren (12) fluchtende Durchbrüche (17) aufweist, in denen jeweils eine Schwenkklappe (14) angeordnet ist, die auf einer durch die Durchgangsbohrung (19) hindurchgeführten Welle (20) angebracht ist.

2. Saugrohranlage nach Anspruch 1, dadurch gekennzeichnet, daß der Ansaugverteiler (2) rohrförmig ist, daß sich die ersten Einzelsaugrohre (4 bis 9) in einem Bogen über mehr als 270° um den Ansaugverteiler erstrecken, daß jedes zweite Einzelsaugrohr (12) parallel zu dem zugehörigen ersten Einzelsaugrohr radial innerhalb desselben verläuft und mit diesem eine gemeinsame Wand (13) besitzt und nahe dem zylinderseitigen Ende des ersten Einzelsaugrohres in dieses mündet.

3. Saugrohranlage nach Anspruch 1 oder 2, dadurch gekennzeichnet, daß die Längsbohrung (16) die zweiten Einzelsaugrohre (12) nahe ihrer Einmündung in die ersten Einzelsaugrohre schneidet.

4. Saugrohranlage nach den Ansprüchen 1 und 2 für eine Brennkraftmaschine mit zwei Zylinderreihen in V-Anordnung, dadurch gekennzeichnet, daß die den Zylindern der ersten Zylinderreihe zugeordneten Einzelsaugrohre sich im Uhrzeigersinn und die den Zylindern der zweiten Zylinderreihe zugeordneten Einzelsaugrohre sich entgegen dem Uhrzeigersinn um den Ansaugverteiler (2) erstrecken und in Längsrichtung des Ansaugverteilers jeweils ein erstes und zweites Einzelsaugrohr für einen Zylinder der ersten Zylinderreihe auf ein erstes und zweites Einzelsaugrohr für einen Zylinder der zweiten Zylinderreihe folgt, und daß eine die zweiten Einzelsaugrohre für die Zylinder der ersten Zylinderreihe schneidende erste Längsbohrung (16) und eine die zweiten Einzelsaugrohre (12) für die Zylinder der zweiten Zylinderreihe schneidende zweite Längsbohrung (12) vorgesehen ist, in die jeweils ein Tragkörper (15) mit Durchbrüchen (17) und in diesen auf einer Welle (20) angeordneten Schwenkklappen (14) eingesetzt ist, und daß die beiden Wellen (20) zur gemeinsamen Drehung miteinander verbunden sind.

5. Saugrohranlage nach Anspruch 4, dadurch gekennzeichnet, daß die die Längsbohrungen (16) enthaltenden Abschnitte (24) des Gußteils (1) zwischen benachbarten zweiten Einzelsaugrohren (12) unterbrochen sind, und daß jeder Tragkörper (15) im Bereich dieser Unterbrechungen (26) einen kleineren Querschnitt aufweist als in den Bereichen, in denen die Durchbrüche (17) mit den Schwenkklappen (14) vorgesehen sind.

## Claims

1. Inlet pipe assembly for a multiple cylinder internal combustion engine, comprising
- an inlet distributor (2)
- individual inlet pipes (4 to 9) arranged alongside one another, starting in the inlet distributor and each running to one cylinder
- shorter second individual inlet pipes (12), starting in the inlet distributor (2) and each opening out into a first individual pipe, and
- swivelling valves (14) for shutting off or opening up the second individual inlet pipes,
characterised in that
the inlet distributor (2) and the first and second individual inlet pipes (6 to 9 and 12, respectively) are formed by a single cast part (1) incorporating a longitudinal bore (16) which intersects the second individual inlet pipes (12), and that set into this longitudinal bore is a supporting body (15) which incorporates a central through-bore (19) and passages (17) aligned with the second individual inlet pipes (12), there being arranged in each of the said passages (17) a swivelling valve (14) which is mounted on a shaft (20) passing through the through-bore (19).

2. Inlet pipe assembly according to claim 1, characterised in that the inlet distributor (2) is tubular, that the first individual inlet pipes (4 to 9) curve in an arc of more than 270° around the inlet distributor, that every other individual inlet pipe (12) runs parallel to the associated first individual inlet pipe, radially within the latter, and shares a common wall (13) therewith and opens out into the first individual inlet pipe, close to the cylinder-side end thereof.

3. Inlet pipe assembly according to claim 1 or 2, characterised in that the longitudinal bore (16) intersects the second individual inlet pipes (12) close to where they open out into the first individual inlet pipes.

4. Inlet pipe assembly according to claims 1 and 2 for an internal combustion engine having two rows of cylinders in a V-shaped configurarion, characterised in that the individual inlet pipes allocated to the cylinders of the first cylinder row extend in a clockwise direction and the individual inlet pipes allocated to the cylinders of the second cylinder row extend in an anti-clockwise direction around the inlet distributor (2), and in the longitudinal direction of the inlet distributor a first and second individual inlet pipe for a cylinder of the first cylinder row respectively follow a first and second individual inlet pipe for a cylinder of the second cylinder row, and that there are provided a first longitudinal bore (16) intersecting the second individual inlet pipes for the cylinders of the first cylinder row and a second longitudinal bore (12) intersecting the second individual inlet pipes (12) for the cylinders of the second cylinder row, into which second longitudinal bore (12) there are respectively set a supporting body (15) with passages (17) and set therein swivelling valves (14) mounted on a shaft (20), and that the two shafts (20) are joined together so as to rotate jointly.

5. Inlet pipe assembly according to claim 4, characterised in that the sections (24) of the cast part (1) which contain the longitudinal bores (16) are discontinuous between adjacent second individual inlet pipes (12), and that each supporting body (15) has a smaller cross-section in the region of these breaks (26) than in the regions in which the passages (17) are provided with the swivelling valves (14).

## Revendications

1. Tubulure d'admission pour un moteur à combustion interne multicylindre, comportant
- un distributeur d'admission (2)
- des tuyaux individuels d'admission (4 à 9) disposés côte à côte, qui partent du distributeur d'admission et s'étendent chacun jusqu'à un cylindre
- des seconds tuyaux individuels d'admission (12) plus courts, qui partent du distributeur d'admission (2) et débouchent chacun dans un premier tuyau individuel d'admission, et
- des papillons pivotants (14) destinés à obturer ou libérer les seconds tuyaux individuels d'admission,
caractérisée en ce que
le distributeur d'admission (2) et les premiers et seconds tuyaux individuels d'admission (6 à 9 ou 12) sont formés dans une pièce coulée monobloc (1), qui présente une forure longitudinale (16) coupant les seconds tuyaux individuels d'admission (12), et en ce que, dans cette forure longitudinale, est inséré un corps de support (15), qui présente un alésage traversant central (19) et des perçages (17) en alignement avec les seconds tuyaux individuels d'admission (12), perçages dans chacun desquels est disposé un papillon pivotant (14), qui est monté sur un arbre (20) introduit à travers l'alésage traversant (19).

2. Tubulure d'admission selon la revendication 1, caractérisée en ce que le distributeur d'admission (2) est de forme tubulaire, en ce que les premiers tuyaux individuels d'admission (4 à 9) se déploient selon un arc couvrant plus de 270° autour du distributeur d'admission, et en ce que chacun des seconds tuyaux individuels d'admission (12) s'étend parallèlement au premier tuyau individuel d'admission associé, du côté de celui-ci situé radialement à l'intérieur, possède une paroi commune (13) avec lui et débouche dans le premier tuyau individuel d'admission, à proximité de l'extrémité, située côté cylindre, de ce dernier.

3. Tubulure d'admission selon la revendication 1 ou 2, caractérisée en ce que la forure longitudinale (16) coupe les seconds tuyaux individuels d'admission (12) à proximité de leur embouchure dans les premiers tuyaux individuels d'admission.

4. Tubulure d'admission selon les revendications 1 et 2, pour un moteur à combustion interne comportant deux rangées de cylindres selon une disposition en V, caractérisée en ce que les tuyaux individuels d'admission, qui sont associés aux cylindres de la première rangée de cylindres, se déploient dans le sens des aiguilles d'une montre autour du distributeur d'admission (2) et les tuyaux individuels d'admission, qui sont associés aux cylindres de la seconde rangée de cylindres, se déploient dans le sens inverse de celui des aiguilles d'une montre autour du distributeur d'admission (2), et, dans la direction longitudinale du distributeur d'admission, un premier et un second tuyau individuel d'admission, destinés à un cylindre de la première rangée de cylindres, suivent chaque fois un premier et un second tuyau individuel d'admission destinés à un cylindre de la seconde rangée de cylindres, et en ce qu'il est prévu une première forure longitudinale (16), coupant les seconds tuyaux individuels d'admission destinés aux cylindres de la première rangée de cylindres, et une seconde forure longitudinale (16) coupant les seconds tuyaux individuels d'admission (12) destinés aux cylindres de la seconde rangée de cylindres, dans chacune desquelles est inséré un corps de support (15) comportant des perçages (17) et, dans ceux-ci, des papillons pivotants (14) disposés sur un arbre (20), et en ce que les deux arbres (20) sont reliés l'un à l'autre en vue d'une rotation conjointe.

5. Tubulure d'admission selon la revendication 4, caractérisée en ce que les parties (24) de la pièce coulée (1), qui contiennent les forures longitudinales (16), sont interrompues entre des seconds tuyaux individuels d'admission (12) voisins, et en ce que chaque corps de support (15) présente, dans la région de ces interruptions (26), une section transversale plus petite que dans les régions dans lesquelles les perçages (17) comportant les papillons pivotants (14) sont prévus.
